# EUROPÄISCHE PATENTSCHRIFT

(11) **EP 1 539 532 B1**
(45) Veröffentlichungstag und Bekanntmachung des Hinweises auf die Patenterteilung: **11.02.2009**
(21) Anmeldenummer: 03750532.8
(22) Anmeldetag: 12.09.2003
(51) Int. Cl.: B60N 2/22

(54) **EINSTELLER FÜR EINEN FAHRZEUGSITZ**
ADJUSTER FOR A VEHICLE SEAT
DISPOSITIF DE REGLAGE POUR SIEGE DE VEHICULE

(30) Priorität: 17.09.2002 DE 10242950
(43) Veröffentlichungstag der Anmeldung: 15.06.2005
(73) Patentinhaber: KEIPER GmbH & Co. KG, 67657 Kaiserslautern (DE)
(72) Erfinder: LEHMANN, Ulrich, 53347 Alfter-Bonn (DE); ASSMANN, Uwe, 42852 Remscheid (DE)
(74) Vertreter: Patentanwälte Hosenthien-Held und Dr. Held
(86) Internationale Anmeldenummer: PCT/EP2003/010143
(87) Internationale Veröffentlichungsnummer: WO 2004/026621

(56) Entgegenhaltungen:
- EP-A- 0 415 781
- WO-A-02/34565
- GB-A- 2 356 803
- US-B1- 6 338 532

## Beschreibung

Die Erfindung betrifft einen Einsteller für einen Fahrzeugsitz, insbesondere einen Lehnenneigungseinsteller für einen Kraftfahrzeugsitz, mit den Merkmalen des Oberbegriffs des Anspruches 1.

Bei einem beispielsweise aus der WO 00/44582 A1 bekannten Einsteller dieser Art sitzt der Hebel drehfest auf einer zentralen Welle, durch deren Drehung die Rastbeschläge auf beiden Seiten des Fahrzeugsitzes mittels Drehung des jeweiligen Mitnehmers gleichzeitig entriegelt werden. Die US 6,338,532 B1 zeigt einen Einsteller vergleichbarer Bauart, bei dem der Rastbeschlag nur einen Riegel aufweist. Der in der EP 0 415 781 A2 offenbarte Rastbeschlag beschreibt einen Rastbeschlag anderer Bauart mit einer schwenkbaren Klinke anstelle der radial verschiebbaren Riegel. Die GB 2 356 803 A betrifft eine Sperre, die nach dem Prinzip eines Freilaufs funktioniert, während die WO 02/34565 A1 einen Antrieb für ein Schrittschaltwerk zeigt.

Der Erfindung liegt die Aufgabe zu Grunde, einen Einsteller der eingangs genannten Art zu verbessern. Diese Aufgabe wird erfindungsgemäß durch einen Einsteller mit den Merkmalen des Anspruches 1 gelöst. Vorteilhafte Ausgestaltungen sind Gegenstand der Unteransprüche.

Ein Getriebeeingriff mittels einer Verzahnung zwischen dem Mitnehmer und dem in direktem Kontakt mit dem Mitnehmer stehenden Hebel bewirkt eine definierte Entriegelungsbewegung mit einer möglichst guten Momentenübertragung, wofür der Getriebeingriff über eine Evolventenverzahnung erfolgen kann.

Es wird ein modulares System geschaffen, mit dem bei gleichem Mitnehmer ein zentral gelagerter Hebel oder ein dezentral gelagerter Hebel auf der Außenseite des Rastbeschlags angeordnet werden kann. Durch eine zentrale Anordnung können höhere Momente übertragen werden. Durch eine dezentrale Anordnung der Schwenkachse des Hebels kann einerseits eine Drehrichtungsumkehr bei der Beschlagsentriegelung erreicht werden, was einen größeren Schutz vor Ladung bietet, und andererseits ein geeignetes Übersetzungsverhältnis gewählt werden, was den Bedienkomfort erhöht.

Im folgenden ist die Erfindung anhand dreier in der Zeichnung dargestellten Ausführungsbeispiele näher erläutert. Es zeigen
- Fig. 1: eine Seitenansicht des ersten Ausführungsbeispiels,
- Fig. 2: eine weitere, mit Blickrichtung um 90° versetzte Seitenansicht des ersten Ausführungsbeispiels,
- Fig. 3: eine Detailansicht von Fig. 1 ohne Lehnen-Kompensationsfeder,

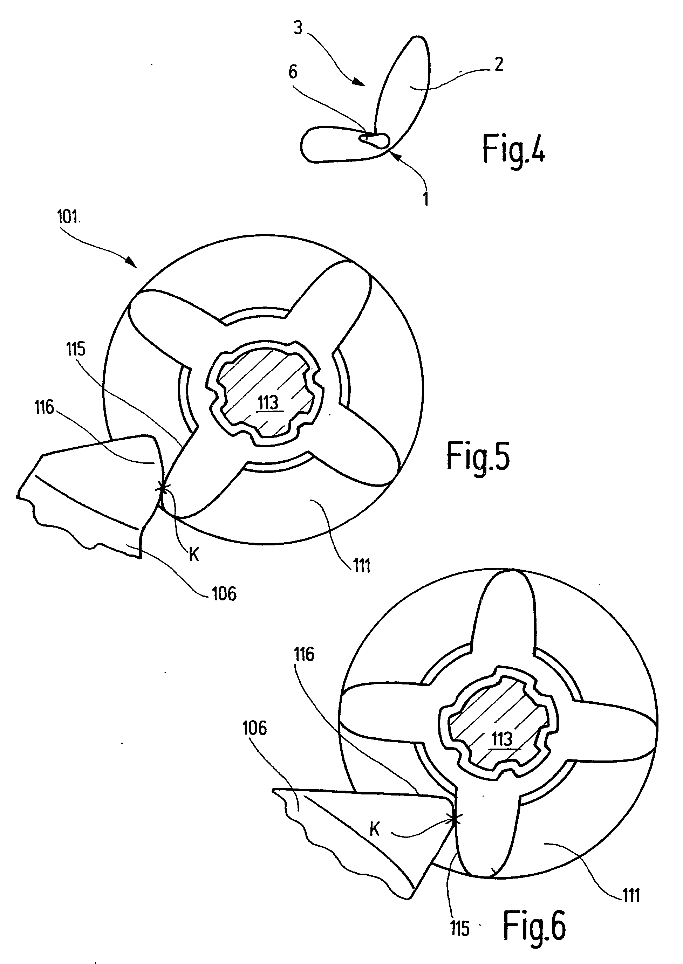

- Fig. 4: eine schematische Darstellung eines Fahrzeugsitzes,
- Fig. 5: eine Detailansicht des zweiten Ausführungsbeispiels in der Ausgangsstellung,
- Fig. 6: eine Detailansicht des zweiten Ausführungsbeispiels in der Endstellung, und

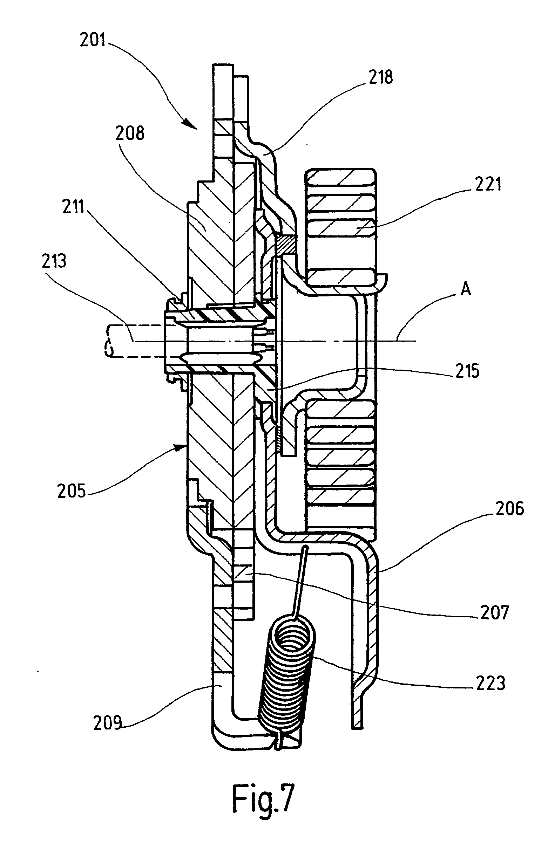

- Fig. 7: einen Schnitt durch das dritte Ausführungsbeispiel.

Im ersten Ausführungsbeispiel ist ein Einsteller 1 zur Neigungseinstellung der Lehne 2 eines Fahrzeugsitzes 3, insbesondere eines Kraftfahrzeugsitzes, vorgesehen, wobei bei zweitürigen Kraftfahrzeugen auch ein Freischwenken der Lehne 2 möglich ist. Der Einsteller 1 weist auf beiden Seiten des Fahrzeugsitzes 3 je einen Rastbeschlag 5 und auf einer Seite einen Hebel 6 zur Betätigung des Einstellers 1 auf.

Jeder der beiden Rastbeschläge 5 weist ein Beschlagunterteil 7 und ein relativ zu diesem verdrehbares und verriegelbares Beschlagoberteil 8 auf, wobei das Beschlagunterteil 7 mittels eines unteren Adapters 9 an der Sitzteilstruktur des Fahrzeugsitzes 3 befestigt ist, während das Beschlagoberteil 8 an der Struktur der Lehne 2 angebracht ist. Die beiden Beschlagteile 7 und 8 umschließen einen Bauraum, innerhalb dessen zwei im Beschlagunterteil 7 gelagerte und geführte Riegel radial verschiebbar sind, welche zum Verriegeln mit dem Beschlagoberteil 8 zusammenwirken. Die Riegel werden durch einen federbelasteten Exzenter, der drehfest auf einem zentral angeordneten Mitnehmer 11 sitzt, radial nach außen bewegt und durch eine ebenso angeordnete Mitnehmerscheibe radial nach innen gezogen. Der Aufbau der Rastbeschläge 5 entspricht demjenigen gemäß der e.g. WO 00/44582 A1.

Die beiden Rastbeschläge 5 stehen miteinander in Getriebeverbindung mittels einer profilierten Welle 13, welche drehfest in jeweils eine zentrale Aufnahme der Mitnehmer 11 eingeführt ist. Die Welle 13 definiert die zentrale Achse der Rastbeschläge 5. Auf der dem Hebel 6 zugeordneten Seite des Einstellers 1 ist am Mitnehmer 11 eine erste Evolventenverzahnung 15 angeformt, und zwar vorliegend ein einzelner Zahn, wobei der Hebel 6 eine zweite Evolventenverzahnung 16 ebenfalls in Form eines einzelnen Zahnes aufweist. Der Hebel 6 ist mittels eines Lagerbauteils 17 schwenkbar auf dem Beschlagunterteil 7 gelagert, wobei seine Schwenkachse A parallel beabstandet zur Welle 13 angeordnet ist, also dezentral angeordnet ist. Die beiden Evolventenverzahnungen 15 und 16 berühren einander in einem Kontaktpunkt K, welcher zur Welle 13 als zentraler Achse einen Abstand R₁ und zur Schwenkachse A des Hebels 6 einen Abstand R₂ aufweist. Bei der Konstruktion kann durch eine Vorauswahl dieser Abstände in der Ausgangsstellung ein anfängliches Übersetzungsverhältnis für den Drehmomentenübertrag zwischen dem Hebel 6 und dem Mitnehmer 11 vorgegeben werden.

Am Beschlagoberteil 8 ist noch ein Haltebügel 18 befestigt, auf welchem das innere Ende einer spiralförmig aufgewickelten Lehnen-Kompensationsfeder 21 abgestützt ist. Das äußere Ende der vorgespannten Lehnen-Kompensationsfeder 21, welche das Gewicht der Lehne 2 während der Neigungseinstellung und beim Freischwenken wenigstens teilweise ausgleichen soll, ist am unteren Adapter 9 eingehängt. Eine Zugfeder 23 ist zwischen dem Hebel 6 und dem unteren Adapter 9 angebracht und zieht den Hebel 6 in seine Ausgangsstellung gegen einen Anschlag des unteren Adapters 9.

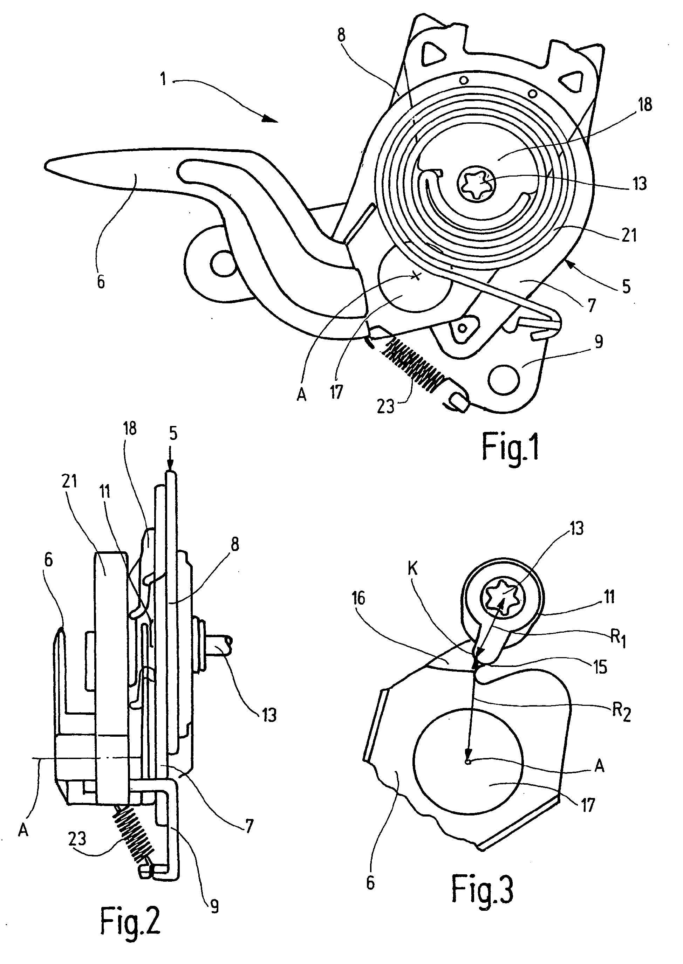

Um den Einsteller 1 zu betätigen, d.h. um insbesondere die Rastbeschläge 5 zu entriegeln, wird der Hebel 6 nach oben gezogen, d.h. in Fig. 1 im Uhrzeigersinn. Die zweite Evolventenverzahnung 16 bewegt sich dann unter Lageveränderung des Kontaktpunktes K entlang der ersten Evolventenverzahnung 15, wobei ein Drehmoment übertragen wird und - je nach Form der Evolventen - das Übersetzungsverhältnis geändert wird. Der Mitnehmer 11 dreht sich dadurch in umgekehrter Drehrichtung, d.h. in Fig. 1 gegen den Uhrzeigersinn. Über die Welle 13 wird diese Drehbewegung zum Mitnehmer 11 des anderen Rastbeschlags 5 übertragen. Der Mitnehmer 11 nimmt den die Riegel freigebenden Exzenter und die die Riegel radial nach innen ziehende Mitnehmerscheibe im Inneren des Rastbeschlags 5 mit.

Der Rastbeschlag 5 wird dadurch entriegelt, so daß das Beschlagoberteil 8 und damit die Lehne 2 in die gewünschte Position schwenkbar ist.

Das zweite Ausführungsbeispiel eines Einstellers 101 gleicht dem ersten Ausführungsbeispiel, so daß gleiche und gleichwirkende Bauteile um 100 höhere Bezugszeichen tragen. Der einziger Unterschied besteht beim Mitnehmer 111 in der Ausgestaltung der ersten Evolventenverzahnung 115, welche vier jeweils um 90° versetzt zueinander angeordnete Zähne aufweist. Einer dieser Zähne wirkt mit der zweiten Evolventenverzahnung 116 des Hebels 106 zusammen. Der Kontaktpunkt K zwischen beiden Kurven wandert beim Übergang von der Ausgangsstellung in die Endstellung. Während dieses Abrollens der Kurven wird der Mitnehmer 111 und damit die Welle 113 wie zuvor gedreht.

Das dritte Ausführungsbeispiel stimmt mit den beiden anderen Ausführungsbeispielen in vielem überein, weshalb gleiche und gleichwirkende Bauteile um 200 bzw. 100 höhere Bezugszeichen tragen. So weist der Einsteller 1 wiederum einen Rastbeschlag 205 mit gleichem Beschlagunterteil 207, Beschlagoberteil 208 und Mitnehmer 211 für die nur angedeutete Welle 213 auf. Am beschlagoberteilfesten Haltebügel 218 ist eine spiralförmige Lehnen-Kompensationsfeder 221 mit ihrem inneren Ende abgestützt, welche an ihrem äußeren Ende an einem beschlagunterteilfesten unteren Adapter 209 eingehängt ist.

Der Hebel 206, der wiederum mittels einer Zugfeder 223 zum unteren Adapter 209 hin vorgespannt ist, ist jedoch nicht zur Welle 213 beabstandet. Vielmehr ist der Hebel 206 zentral gelagert, d.h. seine Schwenkachse A fluchtet mit der Welle 213. Hierfür ist der Hebel 206 mit einer Aufnahme versehen, welche formschlüssig den Mitnehmer 211 mit seiner Evolventenverzahnung 215 aufnimmt, so daß der Hebel 206 drehfest auf dem Mitnehmer 211 sitzt. Die Evolventenverzahnung 215 kann dabei einen Zahn, wie im ersten Ausführungsbeispiel, oder mehrere Zähne, wie im zweiten Ausführungsbeispiel, aufweisen. Mit letzterer Ausbildung können höhere Momente übertragen werden. Die Drehrichtung des Hebels 206 und des Mitnehmers 211 sind bei dieser Art von Getriebeeingriff natürlich gleich.

Da der gleiche Mitnehmer sowohl für den dezentral als auch den zentral gelagerten Hebel eingesetzt werden kann, steht ein modulares System zur Verfügung. Dieses modulare System wird vorzugsweise noch dahingehend erweitert, daß das Lagerbauteil 17 gemäß den ersten beiden Ausführungsbeispielen auf der dem Hebel zugewandten Seite entsprechend dem Mitnehmer geformt ist. Damit ist nicht nur der gleiche Mitnehmer, sondern auch der gleiche Hebel für die beiden Lagerarten einsetzbar.

### Bezugszeichenliste

- 1, 101, 201: Einsteller
- 2: Lehne
- 3: Fahrzeugsitz
- 5,205: Rastbeschlag
- 6, 106, 206: Hebel
- 7, 207: Beschlagunterteil
- 8, 208: Beschlagoberteil
- 9, 209: unterer Adapter
- 11,111,211: Mitnehmer
- 13,113, 213: Welle, zentrale Achse
- 15, 115, 215: (erste) Evolventenverzahnung
- 16, 116: zweite Evolventenverzahnung
- 17: Lagerbauteil
- 18, 218: Haltebügel
- 21, 221: Lehnen-Kompensationsfeder
- 23,223: Zugfeder
- A: Schwenkachse des Hebels
- K: Kontaktpunkt
- R₁: Abstand von K zur Welle
- R₂: Abstand von K zu A

## Patentansprüche

1. Einsteller für einen Fahrzeugsitz, insbesondere Lehnenneigungseinsteller für einen Kraftfahrzeugsitz, mit wenigstens einem Rastbeschlag (5; 205), welcher ein Beschlagunterteil (7; 207) und ein Beschlagoberteil (8; 208) als zwei relativ zueinander um eine zentrale Achse (13; 113; 213) schwenkbare, miteinander verriegelbare Beschlagteile (7, 8; 207, 208) aufweist, die einen Bauraum umschließen, innerhalb dessen zwei im Beschlagunterteil (7; 207) gelagerte und geführte Riegel radial verschiebbar sind, welche zum Verriegeln des Rastbeschlags (5; 205) mit dem Beschlagoberteil (8; 208) zusammenwirken und welche durch einen federbelasteten Exzenter, der drehfest auf einem zentral angeordneten Mitnehmer (11; 111; 211) sitzt, radial nach außen bewegt und durch eine ebenso angeordnete Mitnehmerscheibe radial nach innen gezogen werden, wobei der Rastbeschlag (5; 205) durch Schwenken eines Hebels (6; 106; 206), der schwenkbar um eine Schwenkachse (A) gelagert ist, über den um die zentrale Achse (13; 113; 213) herum angeordneten, von der Außenseite des Rastbeschlags (5; 205) zugänglichen, drehbaren Mitnehmer (11; 111; 211) entriegelbar ist, **dadurch gekennzeichnet, dass** der Hebel (6; 106; 206) über wenigstens eine Verzahnung (15, 16; 115, 116; 215) in direktem Kontakt mit dem Mitnehmer (11; 111; 211) steht.

2. Einsteller nach Anspruch 1, **dadurch gekennzeichnet, dass** die zentrale Achse durch eine Welle (13; 113; 213) definiert wird, welche zwei Rastbeschläge (5; 205) des Einstellers (1; 201) miteinander in Wirkverbindung bringt.

3. Einsteller nach Anspruch 2, **dadurch gekennzeichnet, dass** der Mitnehmer (11; 111; 211) drehfest auf der Welle (13; 113; 213) sitzt.

4. Einsteller nach einem der Ansprüche 1 bis 3, **dadurch gekennzeichnet, dass** bei einer zentralen Lagerung die Schwenkachse (A) des Hebels (206) mit der zentralen Achse (213) fluchtet.

5. Einsteller nach Anspruch 4, **dadurch gekennzeichnet, dass** der Hebel (206) drehfest auf dem Mitnehmer (211) sitzt.

6. Einsteller nach einem der Ansprüche 1 bis 3, **dadurch gekennzeichnet, dass** bei einer dezentralen Lagerung die Schwenkachse (A) des Hebels (6; 106) versetzt zur zentralen Achse (13; 113) angeordnet ist.

7. Einsteller nach Anspruch 6, **dadurch gekennzeichnet, dass** sowohl der Hebel (6; 106) als auch der Mitnehmer (11; 111) je eine Evolventenverzahnung (15,16; 115, 116; 215) mit jeweils wenigstens einem Zahn aufweisen.

8. Einsteller nach einem der Ansprüche 4 bis 7, **dadurch gekennzeichnet, dass** der gleiche Hebel (6; 106; 206) und/oder der gleiche Mitnehmer (11; 111; 211) sowohl für eine zentrale als auch eine dezentrale Lagerung einsetzbar ist.

9. Fahrzeugsitz (3) mit einer neigungseinstellbaren Lehne (2), **gekennzeichnet durch** einen Einsteller (1) nach einem der Ansprüche 1 bis 8.

## Claims

1. Adjuster for a vehicle seat, in particular backrest inclination adjuster for a motor vehicle seat, with at least one detent fitting (5; 205) which comprises a lower fitting part (7; 207) and an upper fitting part (8; 208) as two fitting parts (7, 8; 207, 208) which can be pivoted relative to one another about a central axis (13; 113; 213), can be locked together and enclose a construction space inside which two locking elements, which are mounted and guided in the lower fitting part (7; 207), are radially displaceable, which locking elements co-operate to lock the detent fitting (5; 205) to the upper fitting part (8; 208) and are moved radially outwards by a spring-loaded eccentric, which is seated in a rotationally rigid manner on a centrally arranged driver (11; 111; 211), and are pulled radially inwards by a driver plate arranged in the same way, wherein the detent fitting (5; 205) can be unlocked by pivoting a lever (6; 106; 206), which is mounted so as to be pivotable about a pivot axis (A), via the rotatable driver (11; 111; 211), which is arranged around the central axis (13; 113; 213) and is accessible from the outside of the detent fitting (5; 205), **characterised in that** the lever (6; 106; 206) is in direct contact with the driver (11; 111; 211) via at least one tooth system (15, 16; 115, 116; 215).

2. Adjuster according to Claim 1, **characterised in that** the central axis is defined by a shaft (13; 113; 213) which actively connects two detent fittings (5; 205) of the adjuster (1; 201) together.

3. Adjuster according to Claim 2, **characterised in that** the driver (11; 111; 211) is seated in a rotationally rigid manner on the shaft (13; 113; 213).

4. Adjuster according to any one of Claims 1 to 3, **characterised in that** the pivot axis (A) of the lever (206) is aligned with the central axis (213) in the case of a central mounting.

5. Adjuster according to Claim 4, **characterised in that** the lever (206) is seated in a rotationally rigid manner on the driver (211).

6. Adjuster according to any one of Claims 1 to 3, **characterised in that** the pivot axis (A) of the lever (6; 106) is offset in relation to the central axis (13; 113) in the case of a decentralised mounting.

7. Adjuster according to Claim 6, **characterised in that** both the lever (6; 106) and the driver (11; 111) have an involute tooth system (15, 16; 115, 116; 215) with at least one tooth in each case.

8. Adjuster according to any one of Claims 4 to 7, **characterised in that** the same lever (6; 106; 206) and/or the same driver (11; 111; 211) can be used both for a central and a decentralised mounting.

9. Vehicle seat (3) with an inclination-adjustable backrest (2), **characterised by** an adjuster (1) according to any one of Claims 1 to 8.

## Revendications

1. Dispositif d'ajustement pour un siège de véhicule, en particulier dispositif d'ajustement d'inclinaison de dossier pour un siège de véhicule automobile, comportant au moins une armature à encliquetage (5 ; 205), laquelle présente une partie inférieure d'armature (7 ; 207) et une partie supérieure d'armature (8 ; 208) en tant que deux parties d'armature (7, 8 ; 207, 208) verrouillables l'une avec l'autre, aptes à pivoter l'une par rapport à l'autre autour d'un axe central (13 ; 113 ; 213), parties d'armature qui entourent un espace de montage, à l'intérieur duquel deux verrous montés et guidés dans la partie inférieure d'armature (7 ; 207) sont déplaçables radialement, lesquels coopèrent pour le verrouillage de l'armature à encliquetage (5 ; 205) avec la partie supérieure d'armature (8 ; 208) et lesquels sont déplacés radialement vers l'extérieur par un excentrique chargé par ressort, qui est en appui de façon solidaire en rotation sur un organe d'entraînement (11 ; 111 ; 211) disposé de façon centrale et sont tirés radialement vers l'intérieur par un disque d'entraînement disposé de même, l'armature à encliquetage (5 ; 205) étant déverrouillable par basculement d'un levier (6 ; 106 ; 206), qui est monté apte à pivoter autour d'un axe de pivotement (A), sur l'organe d'entraînement rotatif (11 ; 111 ; 211), accessible à partir du côté externe de l'armature à encliquetage (5 ; 205), disposé autour de l'axe central (13 ; 113 ; 213), **caractérisé par le fait que** le levier (6 ; 106 ; 206) est en contact direct avec l'organe d'entraînement (11 ; 111 ; 211) par l'intermédiaire d'au moins une denture (15, 16 ; 115, 116 ; 215).

2. Dispositif d'ajustement selon la revendication 1, **caractérisé par le fait que** l'axe central est défini par un arbre (13 ; 113 ; 213), lequel met en liaison fonctionnelle l'une avec l'autre deux armatures à encliquetage (5 ; 205) du dispositif de réglage (1 ; 201).

3. Dispositif de réglage selon la revendication 2, **caractérisé par le fait que** l'organe d'entraînement (11 ; 111 ; 211) est en appui solidaire en rotation sur l'arbre (13 ; 113 ; 213).

4. Dispositif de réglage selon l'une des revendications 1 à 3, **caractérisé par le fait que**, pour une disposition centrée, l'axe de pivotement (A) du levier (206) s'aligne avec l'axe central (213).

5. Dispositif de réglage selon la revendication 4, **caractérisé par le fait que** le levier (206) repose solidaire en rotation sur l'organe d'entraînement (211).

6. Dispositif de réglage selon l'une quelconque des revendications 1 à 3, **caractérisé par le fait que**, pour une disposition décentrée, l'axe de pivotement (A) du levier (6 ; 106) est disposé décalé par rapport à l'axe central (13 ; 113).

7. Dispositif de réglage selon la revendication 6, **caractérisé par le fait que**, non seulement le levier (6 ; 106) mais encore l'organe d'entraînement (11 ; 111) présentent chacun un engrenage à développante (15, 16 ; 115, 116 ; 215) avec à chaque fois au moins une dent.

8. Dispositif de réglage selon l'une quelconque des revendications 4 à 7, **caractérisé par le fait que** le même levier (6 ; 106 ; 206) et/ou le même organe d'entraînement (11 ; 111 ; 211) est apte à être installé non seulement pour la position centrée mais encore pour une position décentrée.

9. Siège de véhicule (3) comportant un levier (2) apte à être réglé en inclinaison, **caractérisé par** un dispositif de réglage (1) tel que défini à l'une des revendications 1 à 8.
